# FASCICULE DE BREVET EUROPEEN

(11) **EP 3 234 555 B1**
(45) Date de publication et mention de la délivrance du brevet: **24.03.2021**
(21) Numéro de dépôt: 15820467.7
(22) Date de dépôt: 16.12.2015
(51) Int. Cl.: G01N 21/47

(54) **SYSTÈME D'OBSERVATION D'OBJETS**
SYSTEM ZUR BETRACHTUNG VON OBJEKTEN
SYSTEM FOR OBSERVING OBJECTS

(30) Priorité: 17.12.2014 FR 1462645
(43) Date de publication de la demande: 25.10.2017
(73) Titulaire: Commissariat à l'énergie atomique et aux énergies alternatives, 75015 Paris (FR)
(72) Inventeur: GENUER, Valentin, 33250 Saint-Sauveur (FR); MARCOUX, Pierre, 38120 Saint Egrève (FR); SCHULTZ, Emmanuelle, 38120 Saint Egrève (FR)
(74) Mandataire: Lavoix
(86) Numéro de dépôt international: PCT/EP2015/080106
(87) Numéro de publication internationale: WO 2016/097063

(56) Documents cités:
- WO-A1-00/55669
- WO-A1-03/095995
- WO-A2-01/83673
- WO-A2-2010/077304
- FR-A1- 3 001 544
- US-A- 4 492 467
- US-A1- 2014 226 158
- US-B2- 7 465 560

## Description

La présente invention concerne un système d'observation d'objets.

Il est connu des documents US 2008/0310692 A1, US 7 465 560 B2 et EP 2 122 326 B1 de déterminer une espèce biologique d'une bactérie en étudiant la figure de transmission obtenue par la diffusion de photons incidents par la bactérie, la bactérie étant sur un substrat.

En outre, il est connu du document WO 00/5569 A1 d'observer un échantillon biologique en étudiant de la lumière rétrodiffusée par l'échantillon.

Toutefois, une telle figure de transmission ne peut être obtenue lorsque le substrat comporte du sang parce que le faible coefficient de transmission du sang empêche l'obtention de la figure de diffraction. En effet, dans les documents précités, l'obtention d'image en transmission ne fonctionne pas lorsque le substrat et son support sont opaques.

Il existe donc un besoin pour un système d'observation d'objets permettant d'observer les objets sur un substrat non transparent.

A cet effet, il est proposé un système d'observation d'objets selon la revendication 1 et un procédé d'observation d'objets selon la revendication 12.

Le système d'observation d'objets comporte une source lumineuse propre à émettre de la lumière polarisée rectilignement selon une première direction, un support adapté pour recevoir un substrat ayant une surface comportant des objets, au moins l'un du support et du substrat étant translucide ou opaque, un détecteur propre à récolter de la lumière rétrodiffusée issue de l'interaction entre la lumière émise par la source lumineuse et les objets, un séparateur de polarisation propre à réfléchir de la lumière polarisée rectilignement selon une deuxième direction de polarisation et propre à transmettre de la lumière polarisée rectilignement selon une troisième direction, la deuxième direction de polarisation étant perpendiculaire à la troisième direction, et une lame quart-d'onde.

Le séparateur et la lame quart-d'onde étant agencés pour que, le séparateur dirige la lumière émise par la source lumineuse vers le substrat et dirige la lumière rétrodiffusée issue de l'interaction entre la lumière émise par la source lumineuse et les objets vers le détecteur.

Par l'expression « diriger le faisceau lumineux », il est entendu transmettre ou réfléchir le faisceau lumineux.

Ainsi, selon un premier mode de réalisation, le séparateur et la lame quart-d'onde sont agencés pour que, le séparateur réfléchisse la lumière incidente par rapport au séparateur vers le substrat et transmette la lumière rétrodiffusée issue de l'interaction entre la lumière émise par la source lumineuse et les objets vers le détecteur. Selon un autre mode de réalisation, le séparateur et la lame quart-d'onde sont agencés pour que, le séparateur transmette la lumière incidente par rapport au séparateur vers le substrat et réfléchisse la lumière rétrodiffusée issue de l'interaction entre la lumière émise par la source lumineuse et les objets vers le détecteur.

Suivant des modes de réalisation particuliers, le système comprend une ou plusieurs des caractéristiques suivantes, prise(s) isolément ou suivant toutes les combinaisons techniquement possibles :
- les objets sont des microorganismes, le substrat étant un substrat solide, notamment un substrat gélosé, adapté à la croissance desdits microorganismes.
- la première direction et la deuxième direction sont identiques.
- la première direction est différente de la deuxième direction auquel cas le système comprend un élément d'ajustement de la direction de polarisation, l'élément d'ajustement de la direction de polarisation étant disposé entre la source lumineuse et le séparateur, de façon que la lumière incidente au séparateur soit polarisée selon la deuxième direction.
- le substrat présente une surface destinée à interagir avec la lumière de source lumineuse, la surface étant lisse.
- le système comporte, en outre, un capteur propre à acquérir une image des objets.
- la lumière issue de la source lumineuse forme un faisceau, le système comportant un système optique propre à modifier la taille du faisceau.
- les objets sont des objets dont la taille est inférieure à un millimètre.
- les objets sont des microorganismes.
- le système d'observation comprend, en outre, une lame demi-onde propre à modifier la polarisation de lumière émise par la source lumineuse.
- le système d'observation comprend, en outre, un calculateur propre à analyser la lumière rétrodiffusée détecter par le détecteur pour déduire au moins une caractéristique des objets.
- le système d'observation est dépourvu d'optiques intercalées entre le séparateur et la lame quart-d'onde et entre la lame quart-d'onde et le substrat.
- les objets font partie d'une boîte de Pétri présentant un corps cylindrique dont la surface de base est plane et un couvercle cylindrique dont la surface de base est plane et forme un angle avec la surface de base du corps compris entre 0,1 degré et 15 degrés.
- le système optique est propre à obtenir une taille de faisceau comprise entre 30 microns et 250 microns.

La description décrit également un procédé d'observation d'objets à l'aide d'un système d'observation d'objets comportant une source lumineuse propre à émettre de la lumière polarisée rectilignement selon une première direction, un support adapté pour recevoir un substrat ayant une surface comportant des objets, au moins l'un du support et du substrat étant translucide ou opaque, un détecteur propre à récolter de la lumière rétrodiffusée issue de l'interaction entre la lumière émise par la source lumineuse et les objets, un séparateur de polarisation propre à réfléchir de la lumière polarisée rectilignement selon une deuxième direction de polarisation et propre à transmettre de la lumière polarisée rectilignement selon une troisième direction, la deuxième direction de polarisation étant perpendiculaire à la troisième direction, et une lame quart-d'onde. Le procédé comporte l'émission de lumière polarisée rectilignement selon la première direction par une source lumineuse, la récolte de la lumière rétrodiffusée issue de l'interaction entre la lumière émise par la source lumineuse et les objets, la réflexion de la lumière polarisée rectilignement selon la deuxième direction de polarisation, et la transmission de la lumière polarisée rectilignement selon la troisième direction.

Suivant des modes de réalisation particuliers, le procédé comprend une ou plusieurs des caractéristiques suivantes, prise(s) isolément ou suivant toutes les combinaisons techniquement possibles :
- la lumière issue de la source lumineuse forme un faisceau, le système comportant un système optique propre à modifier la taille du faisceau.
- le procédé comporte l'adaptation de la taille du faisceau à la taille des objets.
- le procédé comporte la localisation d'un objet dans une image grand champ.

D'autres caractéristiques et avantages de l'invention apparaîtront à la lecture de la description qui suit de modes de réalisation de l'invention, donnée à titre d'exemple uniquement et en référence aux dessins qui sont :
- figure 1, une vue schématique d'un premier exemple de système d'observation ;
- figure 2, une vue schématique d'une partie du système de la figure 1 en fonctionnement ;
- figure 3, une figure de diffraction obtenue à l'aide du système de la figure 1 pour une croissance de 6 heures d'une micro-colonie de bactéries *(Escherichia coli* de numéro ATCC 11775) dans une boîte de Pétri ;
- figure 4, une figure de diffraction obtenue à l'aide d'un système d'observation dépourvu de cube et de lame quart-d'onde pour une croissance de 6 heures d'une micro-colonie de bactéries *(Escherichia coli* de numéro ATCC 35421) dans une boîte de Pétri ;
- figure 5, une vue schématique d'un deuxième exemple de système d'observation ;
- figure 6, une image dans l'espace direct obtenue à l'aide du système de la figure 5 pour une croissance de 6 heures d'une micro-colonie de bactéries *(Escherichia coli* de numéro ATCC 25922) dans une boîte de Pétri ;
- figures 7 à 12, un ensemble d'images illustrant une procédure d'alignement et d'ajustement de la taille du faisceau sonde sur une colonie de bactéries pour une croissance de 6 heures d'une micro-colonie de bactéries *(Escherichia coli* de numéro ATCC 11775) dans une boîte de Pétri ;
- figure 13, une vue schématique d'un troisième exemple de système d'observation ;
- figure 14, une figure de diffraction obtenue pour une croissance de 6 heures d'une micro-colonie de bactéries *(Escherichia coli* de numéro ATCC 25922) dans une boîte de Pétri lorsque le couvercle de la boîte de Pétri est posé à plat, et
- figure 15, une figure de diffraction obtenue pour une croissance de 6 heures d'une micro-colonie de bactéries *(Escherichia coli* de numéro ATCC 25922) dans une boîte de Pétri lorsque le couvercle de la boîte de Pétri est incliné de 1 degré.

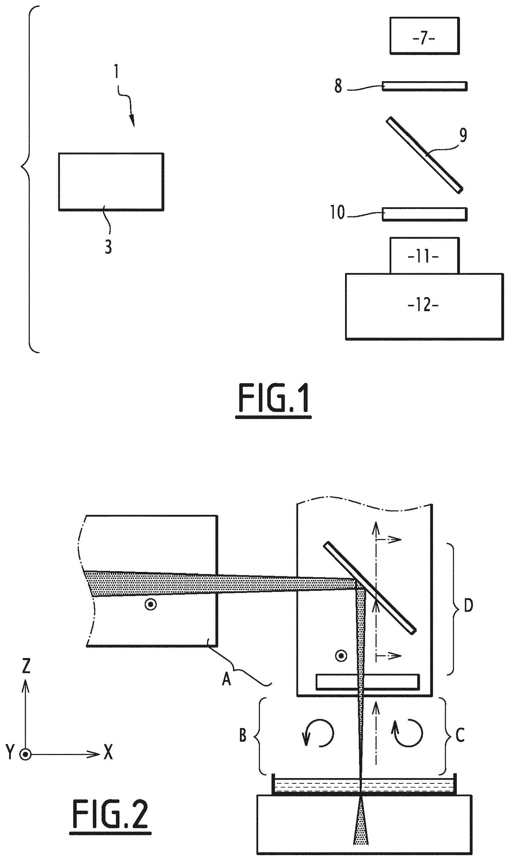

Un système d'observation d'objet, dit système 1, est représenté à la figure 1.

Le système 1 permet d'observer un échantillon 11.

L'échantillon 11 comprend un ensemble de particules et un substrat supportant l'ensemble de particules.

Par particules, il est entendu des particules micrométriques, par exemple des cellules, des microorganismes. Les microorganismes peuvent être, en particulier des bactéries, pouvant être accolées les unes aux autres, de façon à former des colonies bactériennes, des spores, des champignons ou des levures. Il est considéré, pour la suite, que l'ensemble de particules est situé à la surface d'un substrat.

Chaque particule présente une extension maximale selon une direction. Par extension maximale, il est entendu une taille caractéristique de l'ensemble d'organismes. Il s'agit par exemple du diamètre du cercle dans lequel est inscrit l'ensemble d'organismes. D'une façon générale, l'invention s'applique à des organismes ou des ensembles d'organismes dont l'extension maximale est comprise entre 100 nanomètres (nm) et 1 millimètre (mm), de préférence entre 1 micromètre (µm) et 500 µm.

Selon un mode de réalisation particulier, le système 1 est propre à permettre l'observation de colonies bactériennes de taille micrométrique, dont la taille caractéristique est inférieure à 1 mm, par exemple comprise entre 100 µm et 1 mm, voire entre 50 µm et 500 µm. Cela permet une observation à un stade précoce du développement des colonies. Il est alors gagné du temps par rapport aux méthodes basées sur l'observation de colonies bactériennes de taille millimétrique.

Par ailleurs, le système 1 permet également d'analyser une figure de diffraction. L'analyse de la figure de diffraction permet d'assurer le comptage, l'identification, le tri ou la surveillance (aussi désignée sous le terme anglais de « monitoring ») des particules observées. En particulier, l'identification des particules peut se faire sur la base d'une comparaison de chaque figure de diffraction détectée avec une bibliothèque de figures de diffraction de référence, préalablement établie.

Le substrat peut être propre à faire croître au moins une partie de l'ensemble d'organismes. Ainsi, le substrat est lui-même un milieu de culture ou est placé au contact d'un milieu de culture.

Selon un mode de réalisation particulier, le substrat est un substrat solide.

Le substrat solide est, par exemple, un milieu gélosé.

Dans l'exemple de la figure 1, l'échantillon se présente sous la forme d'une boîte de Pétri. Une boîte de Pétri présente un corps de forme cylindrique dont la surface de base est un cercle. La surface de base est plane. En l'occurrence, la surface de base est normale par rapport à la verticale du lieu.

Dans le cas de la figure 1, l'objet à observer est à la surface d'une gélose au sang d'épaisseur environ 4-5 mm contenue dans une boîte de Pétri de diamètre 86 mm.

Le système 1 comporte une source lumineuse 3, un support 12 de l'échantillon 11, un détecteur 7, une lentille 8, un séparateur 9 de polarisation et une lame quart-d'onde 10.

La source lumineuse 3 est propre à émettre de la lumière spatialement cohérente.

La lumière que la source lumineuse 3 est propre à émettre est également polarisée rectilignement selon une première direction D1.

Par exemple, la source lumineuse 3 est une source laser propre à émettre un faisceau laser. Selon une variante, la source lumineuse 3 est une diode électroluminescente (souvent désignée par l'acronyme anglais de LED pour « Light Emitting Diode »).

Le milieu de culture est placé dans une enceinte, l'enceinte étant elle-même disposée sur un support 12.

Le support 12 est adapté pour recevoir un substrat ayant une surface adaptée pour la croissance d'objets.

La position relative du support 12 et de la source lumineuse 3 peut être ajustable pour que de la lumière émise par la source lumineuse 3 ait une interaction avec des objets ayant poussé sur le substrat.

Au moins l'un du support 12 et du substrat est opaque ou translucide.

Par exemple, le substrat peut être opaque, translucide ou transparent. Lorsque le substrat est transparent, le support 12 est absorbant ou diffusant pour éviter la réflexion de la lumière sur le support 12.

Le substrat peut être constitué d'un milieu de culture transparent auquel un agent opacifiant a été ajouté. L'agent opacifiant peut notamment être une poudre minérale, de type Kaolin (argile blanche) ou dioxyde de Titane, ou encore un colorant organique (Bleu de Méthylène, Rouge de Phénol, Bleu de Bromophénol...).

Le détecteur 7 est propre à collecter de la lumière rétrodiffusée issue de l'interaction entre la lumière émise par la source lumineuse et les objets.

La lentille 8 est mise au point à l'infini. Cela signifie que le détecteur 7 est positionné sur son foyer image.

Par l'expression « séparateur de polarisation », il est entendu un dispositif apte à réfléchir une polarisation selon une direction donnée et à transmettre une polarisation selon une direction perpendiculaire.

Dans l'exemple de la figure 1, le séparateur 9 de polarisation est propre à réfléchir de la lumière polarisée rectilignement selon une deuxième direction D2 et propre à transmettre de la lumière polarisée rectilignement selon une troisième direction D3. La deuxième direction D2 est perpendiculaire à la troisième direction D3.

Selon l'exemple particulier de la figure 1, le séparateur 9 de polarisation est une lame.

Dans cet exemple, le séparateur 9 a pour fonction de ne transmettre qu'une seule direction de polarisation et de réfléchir les autres directions. La lumière incidente au faisceau est réfléchie par le séparateur 9, tandis que la lumière réfléchie par l'échantillon 11 est transmise.

Selon une autre variante non représenté, le séparateur 9 de polarisation est un cube.

La lame quart-d'onde 10 est une lame à retard de phase de type λ/4.

La lame quart-d'onde 10 présente la propriété de transformer une polarisation rectiligne en polarisation circulaire et inversement, une polarisation circulaire en polarisation rectiligne.

Le cube 9 et la lame quart-d'onde 10 sont agencés pour que, le cube 9 réfléchisse la lumière émise par la source lumineuse 3 vers l'échantillon 11 et transmette la lumière rétrodiffusée issue de l'interaction entre la lumière émise par la source lumineuse 3 et les objets vers le détecteur 7.

Le fonctionnement du système 1 est maintenant décrit.

La source lumineuse 3 émet de la lumière vers le séparateur 9.

La lumière émise par la source lumineuse 3 est incidente sur le séparateur 9 avec une polarisation s.

L'ensemble du séparateur 9 et la lame quart-d'onde 10 forme un dispositif de sélection de la polarisation dont le fonctionnement est expliqué en référence à la figure 2.

Le séparateur 9 sépare les polarisations. Plus précisément, selon l'exemple de la figure 1, le séparateur 9 transmet la lumière dont la direction de polarisation est parallèle au plan d'incidence, le plan d'incidence étant le plan contenant le rayon incident et la normale à la face considérée. La direction de polarisation parallèle au plan d'incidence est usuellement appelée polarisation p.

Le séparateur 9 réfléchit également la lumière dont la direction de polarisation est perpendiculaire au plan d'incidence. La direction de polarisation perpendiculaire au plan d'incidence est usuellement appelée polarisation s.

Lorsque la lumière incidente sur le séparateur 9 est polarisée rectilignement selon une polarisation s (partie A sur la figure 2), la lumière émise par la source lumineuse 3 est réfléchie en direction de l'échantillon 11.

La lumière se propage alors en direction de la lame quart-d'onde 10.

La lame quart-d'onde 10 convertit la polarisation rectiligne de la lumière en une polarisation circulaire gauche.

La lumière polarisée circulaire gauche se propage alors vers l'échantillon 11 (voir partie B sur la figure 2).

La lumière est alors rétrodiffusée par l'échantillon 11.

Un changement de direction de polarisation a alors lieu du fait d'une propriété de la lumière polarisée circulairement à la réflexion sur une interface. En effet, à la réflexion sur une interface, la direction de polarisation d'une lumière polarisée circulairement change de sens. Ainsi, un faisceau de lumière de polarisation circulaire droite est, après réflexion, de polarisation circulaire gauche.

La lumière rétrodiffusée est donc polarisée avec une polarisation circulaire de sens opposée à la polarisation circulaire incidente, à savoir polarisée circulaire droite (voir partie C sur la figure 2).

La lame quart-d'onde 10 convertit alors la polarisation circulaire droite de la lumière en une polarisation rectiligne de type p.

La lumière polarisée rectiligne de type p se propage alors vers le séparateur 9 (voir partie D sur la figure 2).

Le séparateur 9 transmet la lumière en polarisation p de sorte que la lumière se propage vers la lentille 8.

La lentille 8 sert à former sur le détecteur 7 une image des interférences qui sont localisées à l'infini.

La lumière se propage alors vers le détecteur 7.

Le détecteur 7 enregistre alors une figure de diffraction correspondant à la diffusion élastique des photons par les objets.

Selon une variante, le séparateur 9 transmet la lumière émise par la source de lumière, vers l'échantillon 11 et réfléchit la lumière rétrodiffusée, dont la direction de polarisation est D3, vers le détecteur 7.

D'une façon générale, le séparateur 9 est apte à diriger la lumière incidente, provenant de la source de lumière, vers l'échantillon 11. Il est également apte à diriger la lumière rétrodiffusée par l'échantillon 11, dont la direction de polarisation est perpendiculaire à la celle de ladite lumière incidente, vers le détecteur 7. Le terme diriger désigne alors le fait de transmettre ou de réfléchir la lumière

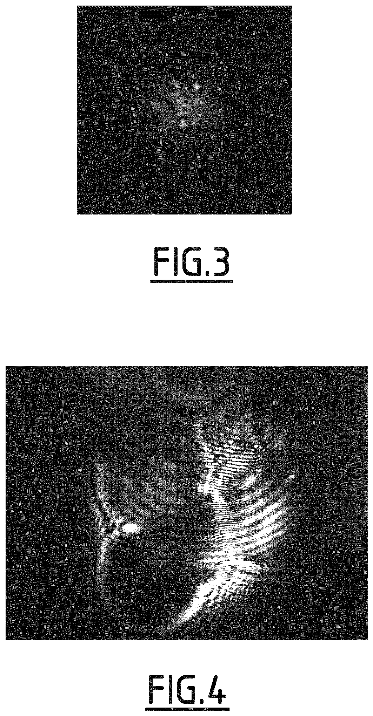

Un exemple de figure de diffraction obtenue pour une croissance de 6 heures de bactéries dans une boîte de Pétri est illustré par la figure 3. En l'occurrence, le substrat est une gélose au sang de mouton COS. L'acronyme COS renvoie à l'expression anglaise *« Columbia Blood Sheep* » qui signifie « sang de mouton de Columbia ».

A titre de comparaison, la même figure de diffraction est représentée à la figure 4 pour un système dépourvu de cube et de lame quart-d'onde. Il est observé une figure de diffraction inexploitable.

Les différences observées entre les figures 3 et 4 s'expliquent par le fait que la gestion de la polarisation proposée pour le système 1 permet d'éliminer toutes les réflexions parasites occasionnées par les surfaces des optiques dans le chemin du faisceau émis par la source lumineuse 3 et du faisceau rétroréfléchi.

Il est observé que la figure de diffraction obtenue avec le système 1 est plus aisément exploitable. De ce fait, le système 1 rend possible l'observation de figures de diffraction formées par des particules localisées sur un substrat opaque ou sur un substrat placé sur un support opaque.

Selon cet exemple, des identifications de micro-colonies bactériennes rapides, à la surface d'un milieu opaque, notamment en seulement 6 heures de culture sont possibles en utilisant le système 1.

Le système 1 est également utilisable pour des macro-colonies et, plus généralement, pour tout type de particules telles que précédemment définies.

En outre, le système 1 permet de réaliser la mesure directement sur le substrat sur lequel repose les objets, en particulier lorsque le substrat est un milieu de culture placé dans une enceinte de type boîte de Pétri. Cela est plus simple que les techniques de microscopie impliquant un transfert des objets sur un substrat compatible avec une mesure en transmission.

Une autre application est la détection de moisissures sur un substrat opaque.

De préférence, le substrat est un milieu de culture suffisamment lisse, pour éviter la multiplication de réflexions ou rétrodiffusions à la surface du substrat, ce qui génère, sur l'image, un bruit préjudiciable à la qualité de la mesure. Par lisse, il est entendu une rugosité de préférence inférieure à 100 µm rms (de l'anglais « root mean square » pour racine carrée de la moyenne des carrés), mieux 50 µm au moins localement, au voisinage d'une particule à détecter.

Selon un mode de réalisation, le seul composant entre le séparateur 9 et l'échantillon 11 est la lame quart-d'onde 10.

Cela signifie qu'aucun autre composant optique n'est intercalé entre le séparateur 9 et l'échantillon 11.

Cela permet d'augmenter la qualité des images en évitant la génération de réflexions parasites qu'occasionneraient des systèmes optiques, par exemple, des lentilles ou objectifs, disposés entre le séparateur 9 et l'échantillon 11.

Selon un mode de réalisation, les composants de mise en forme du faisceau sont disposés en amont du séparateur 9.

Les termes « amont » et « aval » sont définis par rapport au sens de propagation de la lumière. Ainsi, les composants de mise en forme du faisceau sont positionnés en amont du séparateur 9 lorsque les composants sont positionnés entre la source lumineuse 3 et la première face du séparateur 9.

Cela permet d'améliorer la qualité des images de diffraction obtenue.

Selon un mode de réalisation, la lame quart-d'onde 10 est traitée anti-reflets.

Cela permet d'éviter des réflexions parasites sur la lame quart-d'onde 10.

Avantageusement, la première direction D1 et la deuxième direction D2 sont identiques.

Pour modifier la première direction D1, il peut être envisagé de tourner la source lumineuse 3 autour de son axe optique ou d'insérer une lame demi-onde pouvant tourner autour de son axe de révolution. La lame demi-onde a alors pour fonction l'ajustement de la polarisation du faisceau émis par la source lumineuse 3, de façon à ce que le faisceau incident au séparateur 9 soit polarisé rectilignement selon la deuxième direction D2. Naturellement, une telle lame, agissant en tant qu'élément d'ajustement de la direction de la polarisation, n'est pas nécessaire si le faisceau directement émis par la source lumière est directement polarisé rectilignement selon la deuxième direction D2.

Selon les modes de réalisation, la lame demi-onde d'ajustement fait ou non partie de la source lumineuse 3. Une lame demi-onde faisant partie de la source lumineuse 3 présente l'avantage d'être peu encombrante et déjà positionnée sur le montage.

Selon un mode de réalisation, le système 1 comporte, en outre, un calculateur.

Le calculateur est, par exemple, adapté à comparer des figures de diffraction acquises par le détecteur 7 et à déterminer au moins une caractéristique relative à l'ensemble des particules à partir du résultat de la comparaison.

Selon un mode de réalisation, l'échantillon 11 fait partie du système 1.

En variante, le substrat est propre à faire varier l'indice optique d'au moins une partie des particules de l'ensemble des particules. Cela permet d'accroitre les différences entre les différentes figures de diffraction.

Ainsi, à titre d'exemple le substrat comporte des substrats chromogènes précipitants.

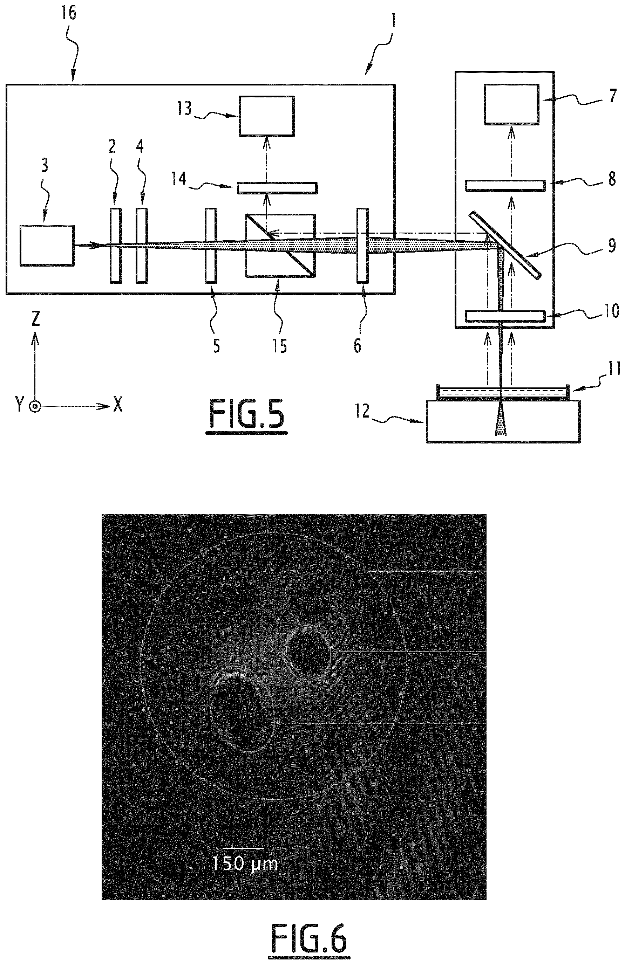

Un deuxième exemple de système 1 est représenté à la figure 5.

Pour la suite, il est défini une direction verticale et deux directions transversales. Chacune de ces directions est symbolisée par des axes représentés sur la figure 5, à savoir l'axe Z pour la direction verticale, l'axe X pour la première direction transversale et l'axe Y pour la deuxième direction transversale.

Comme pour le système 1 selon le premier exemple, le système 1 illustré à la figure 5 comprend la source lumineuse 3, le support 12, le détecteur 7, le cube 9 séparateur de polarisation et la lame quart-d'onde 10.

Le système 1 de la figure 5 comporte également une densité optique 2, une lame demi-onde 4, une première lentille 5, une lame séparatrice 15, une deuxième lentille 6, une troisième lentille 8, une quatrième lentille 14, un capteur 13 et une première translation 16.

La densité optique 2 permet d'atténuer la puissance optique en sortie de la source lumineuse 3.

La densité optique 2 est, selon l'exemple de la figure 5, un filtre à densité neutre de densité optique 4.

Selon l'exemple particulier, la source lumineuse 3 est une source laser monochromatique émettant à une longueur d'onde de 532,2 nanomètres (nm).

De préférence, la source lumineuse 3 émet dans une plage de longueurs d'ondes comprises entre 250 nm et à 1200 nm. D'une façon générale la longueur d'onde doit être inférieure à l'extension maximale de l'objet observé, tout en permettant l'utilisation de moyens de détection usuels. Les longueurs d'onde dans le domaine du visible ou du proche infrarouge sont alors préférées. En variante, la longueur d'onde du faisceau laser est dans une bande de longueurs d'onde différentes. La longueur d'onde dépend notamment de l'organisme à observer et de sa sensibilité à une illumination par un faisceau laser.

Le faisceau laser obtenu présente un diamètre de 0,334 millimètres et une divergence de 2,07 mrad.

Le faisceau laser est monomode (TEM00) et polarisé rectilignement.

Le faisceau laser présente une puissance de 20,1 milliWatts (mW).

La combinaison de la première lentille 5 et de la deuxième lentille 6 permet de mettre en forme le faisceau de la source lumineuse 3 pour obtenir une gamme de tailles de faisceau comprise entre 30 microns à 250 microns (c'est-à-dire supérieure ou égale à 30 microns et inférieure ou égale à 250 microns).

La première lentille 5 est, selon l'exemple de la figure 5, une lentille biconcave de focale -20 mm.

Selon l'exemple de la figure 5, la deuxième lentille 6 est une lentille biconvexe de focale +75,0 mm ayant subi un traitement antireflets pour la gamme de longueur d'ondes 400 nm - 700 nm.

La lame séparatrice 15 permet de séparer un faisceau incident en deux faisceaux.

En l'occurrence, la lame séparatrice 15 permet d'envoyer une partie de la lumière vers le séparateur 9 et une autre partie vers le capteur 13.

Le détecteur 7 est, selon l'exemple de la figure 5, une caméra de type CMOS (CMOS étant l'acronyme de « *Complementary Metal Oxide Semiconductor* » pour « semiconducteur à oxyde de métal complémentaire).

Selon une autre variante, le détecteur 7 est une caméra de type CCD (acronyme de l'expression anglaise « *Charged Coupled Device* » pour « dispositif à charges couplées »).

La troisième lentille 8 permet de collecter la lumière rétrodiffusée et de la focaliser vers le détecteur 7, comme précédemment décrit.

Selon le deuxième exemple, la troisième lentille 8 est une lentille biconvexe de focale +40,0 mm ayant subi un traitement antireflets pour la gamme de longueur d'ondes 400 nm - 700 nm.

Selon l'exemple illustré, le séparateur 9 est propre à interagir avec des ondes dont la longueur d'onde est comprise entre 420 nm et 680 nm.

La quatrième lentille 14 permet de collecter la lumière issue du substrat dans l'espace direct et de la focaliser vers le capteur 13.

Selon l'exemple de la figure 5, la quatrième lentille 14 est une lentille plan-convexe de focale +150,0 mm ayant subi un traitement antireflets pour la gamme de longueur d'ondes 350 nm - 700 nm.

Le support 12 comporte des deuxièmes moyens de translation permettant un déplacement de l'échantillon selon deux directions, à savoir la première direction longitudinale X et la deuxième direction longitudinale Y.

Le capteur 13 permet d'imager l'échantillon 11 en espace direct en même temps que de visualiser le faisceau émis par la source lumineuse 3.

Le capteur 13 est, par exemple, une caméra de type CMOS (CMOS étant l'acronyme de « *Complementary Metal Oxide Semiconductor* » pour « semiconducteur à oxyde de métal complémentaire).

La première translation 16 permet un déplacement de l'ensemble des éléments de la source lumineuse 3, de la densité optique 2 et des première et deuxième lentilles 5 et 6 le long de la première direction transversale X.

Le déplacement de la première translation 16 contribue à faire varier la taille du faisceau sur l'objet entre 30 microns et 1 millimètre.

A titre d'exemple, la course maximale de la première translation 16 est comprise entre 150 mm et 200 mm avec une précision de 1 micron.

Le fonctionnement du système 1 selon le deuxième exemple est similaire au fonctionnement du système 1 selon le premier exemple.

Le système 1 permet également d'obtenir des images en espace direct de l'échantillon 11 via le capteur 13.

Le capteur 13 permet d'avoir une indication de la taille des micro-colonies ainsi que leur forme.

A titre d'illustration, il est supposé qu'une micro-colonie est à imager.

Dans un premier temps, la micro-colonie est localisée sur une image grand champ. Dans le contexte proposé, une image grand champ correspond à une position éloignée du waist du faisceau. Un exemple de telle figure est montré à la figure 6. Dans cette figure, se distinguent plusieurs micro-colonies dans le cercle en pointillés. Une microcolonie est entourée par un premier contour, de forme circulaire. Un deuxième contour de forme ovale entoure deux colonies se chevauchant.

Les micro-colonies apparaissent sous la forme d'ombres sur le capteur 13, car le faisceau lumineux pénètre dans la gélose, puis est rétrodiffusé. Les tâches sombres correspondent à l'absorption de tout ou partie de la lumière rétrodiffusée, par les particules présentes à la surface du substrat. La diffusion dans le substrat a pour effet de dépolariser la lumière. Ainsi, une partie de la lumière rétrodiffusée par le substrat est dépolarisée et n'est pas transmise à travers le séparateur 9 vers le détecteur 7. Cette partie de la lumière rétrodiffusée est réfléchie vers la lame séparatrice 15, la lame séparatrice 15 la dirigeant vers le capteur 13.

L'image fournie par le capteur 13 est une image de contrôle, permettant d'avoir une vue d'ensemble des particules examinées. Une telle image de contrôle permet de s'assurer que des particules sont bien présentes dans le champ observé. L'image de contrôle permet également de détecter la présence de particules se chevauchant, en particulier lorsque les particules sont des micro-colonies. De tels chevauchements conduisent à l'observation de figures de diffraction déformées, et pouvant être préjudiciables dans les applications ou chaque figure de diffraction est utilisée à des fins d'identification.

L'image de contrôle peut également permettre un centrage grossier du faisceau incident relativement aux particules à examiner.

A la suite à cette étape, il est observé l'image produite par le détecteur 7. L'image produite présente une ou une pluralité de figures de diffraction élémentaires, chaque figure de diffraction élémentaire correspondant à une particule ou à un agglomérat de particules.

Le faisceau est alors progressivement aligné sur la micro-colonie jusqu'à ce que soit obtenue une figure d'interférences optimale en termes de nombre de franges et de contraste des franges. Par l'expression « alignement », il est entendu un déplacement de l'échantillon 11, relativement au faisceau incident, dans au moins l'une des trois directions, c'est-à-dire la première direction transversale X, la deuxième transversale Y et l'axe Z.

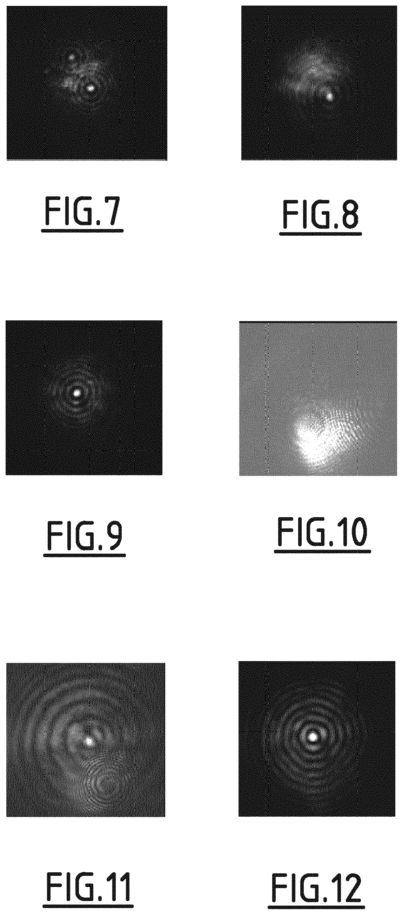

Les figures 7 à 12 sont un ensemble d'images obtenues par le détecteur 7 illustrant une telle procédure d'alignement et d'ajustement de la taille du faisceau sonde sur une colonie de bactéries pour une croissance de 6 heures des bactéries dans une boîte de Pétri.

Sur la figure 7, il s'agit d'une image grand champ dans laquelle il est possible d'apercevoir trois micro-colonies. Sur la figure 8, il est observé que le faisceau est légèrement décalé par rapport à la micro-colonie à imager. La figure 9 correspond au cas où le faisceau est centré par rapport à la micro-colonie à imager.

Pour la mise en œuvre, à titre d'exemple, les deux translations 16 et 12 sont utilisées en contrôlant la symétrie de la figure de diffraction acquise sur le détecteur 7. Un tel contrôle est soit manuel soit automatique, par exemple en mettant en œuvre des outils mathématiques tels qu'une transformée de Hough destinée à la détection de cercles.

La figure 10 illustre le cas où le faisceau présente une taille dans le plan de l'échantillon 11 qui est plus petite que la micro-colonie. Il est observé que le motif d'interférences est éteint. De ce fait, la taille du faisceau est augmenté progressivement (voir figure 11). L'augmentation est, par exemple, mise en œuvre en déplaçant la première translation avec des pas de 100 microns à 500 microns. L'augmentation progressive est mise en œuvre jusqu'à atteindre un motif optimal, c'est-à-dire un motif présentant un maximum d'anneaux contrastés. La figure 12 illustre un tel motif. La détermination du motif optimal se fait par l'œil de l'opérateur, ou par traitement d'image.

La procédure proposée permet d'adapter la taille du faisceau à la taille des micro-colonies.

Ainsi, le système 1 permet d'effectuer la mesure sur des objets de différentes tailles, de 1 micron à 500 microns, grâce à une architecture unique et simple donnant accès à une gamme de tailles de faisceau adaptées.

Le système 1 permet ainsi de détecter et localiser les objets micrométriques sur un grand champ de vue. Cette localisation est réalisée en amont de la mesure de l'image d'interférences en réflexion ; cela rend la mesure plus facile et plus rapide.

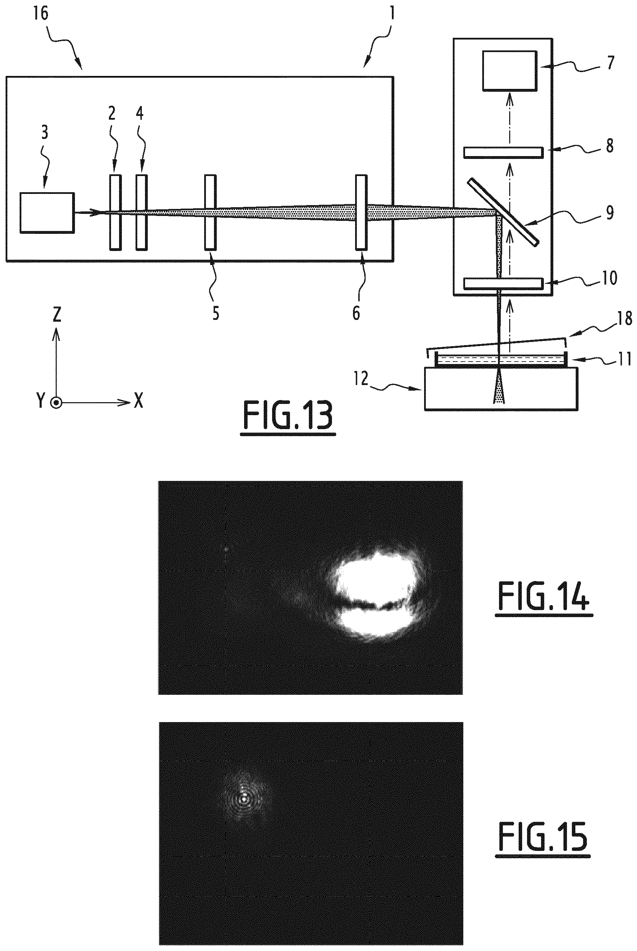

Un troisième exemple de système 1 est représenté à la figure 13.

Le troisième exemple de système 1 est similaire au deuxième exemple de système 1. Les remarques s'appliquant aux éléments communs sont donc également valables pour le troisième exemple de système 1. Ces remarques ne sont pas répétées. Seules les différences sont mises en évidence.

Contrairement au système 1 selon la figure 5, le troisième exemple de système 1 ne comporte pas de lame séparatrice, de quatrième lentille et de capteur.

L'échantillon 11 des exemples précédents est compris dans une enceinte de type boîte de Pétri sans couvercle.

A contrario, l'enceinte de l'échantillon 11 de la figure 13 présente un couvercle 18. Cela permet d'éviter une contamination croisée (c'est-à-dire une contamination du milieu externe croisée à une contamination du substrat, ce qui aboutit à la contamination de boites par des boites précédemment utilisées). Cela permet également d'éviter une contamination des opérateurs. Dans une telle situation, le couvercle 18 est, de préférence, transparent.

Le couvercle 18 présente un angle par rapport à l'horizontale. Selon l'exemple de la figure 13, cet angle est de 1 degré.

La comparaison des figures 14 et 15 permet de montrer l'intérêt d'une telle configuration. En effet, la figure 14 est une figure de diffraction obtenue pour une croissance de 6 heures d'une bactérie dans une boîte de Pétri lorsque le couvercle de la boîte de Pétri est posé à plat tandis que la figure 15 est une figure de diffraction obtenue pour une croissance de 6 heures d'une bactérie dans une boîte de Pétri lorsque le couvercle de la boîte de Pétri est incliné de 1 degré. La figure de diffraction est de meilleure qualité en termes de contraste des franges dans le cas de la figure 15.

Plus généralement, les réflexions parasites issues du couvercle de la boîte peuvent être éliminées en inclinant le couvercle 18 de quelques degrés par rapport à l'horizontale, par exemple entre 0,1 ° et 15°, de préférence entre 1° et 5°.

Autrement formulé, la surface de base du couvercle 18 qui est de forme cylindrique forme un angle avec la surface de base du corps de la boîte de Pétri. Cet angle est compris entre 0,5 ° et 5°.

Dans tous les modes de réalisation présentés, le système 1 permet l'identification de colonies bactériennes sur milieux nutritifs opaques par diffusion élastique en géométrie de réflexion. Notamment, il devient possible d'utiliser un substrat qui est une gélose au sang.

Autrement formulé, le système 1 permet l'acquisition de figures d'interférences issues de la réflexion d'un faisceau lumineux sur des micro-organismes (bactéries uniques, micro-colonies, macro-colonies) et sur des objets micrométriques reposants sur des substrats opaques. Ces substrats ne permettent pas la mesure en transmission telle qu'elle est effectuée par les dispositifs actuels. Le système 1 permet donc d'élargir le domaine d'application aux substrats opaques en proposant une méthode non-destructive, automatisable et rapide.

Il a également été montré que le système 1 permet de résoudre plusieurs difficultés. Notamment, le système 1 permet de localiser rapidement toutes les micro-colonies présentes sur la boîte de Pétri (dont le diamètre est 86 mm). Le système 1 permet aussi d'adapter la taille du faisceau de la source lumineuse 3 à la taille des micro-colonies, tailles qui peuvent varier suivant les espèces bactériennes entre 30 microns et 250 microns. La taille peut aussi varier de plusieurs dizaines de microns pour une même espèce et une même culture. L'adaptation peut se faire au sein d'une série de mesures effectuées sur une même boîte. Le système 1 permet également de centrer le faisceau issu de la source lumineuse 3 sur la ou les micro-colonies considérées. Le système 1 est aussi propre à acquérir les figures d'interférences issues de la réflexion du faisceau sonde sur la ou les micro-colonies étudiées. Le système 1 permet aussi de calculer des paramètres caractérisant les figures d'interférences et de comparer les paramètres à une base existante. Une telle possibilité ouvre la voie à des techniques apprentissages et notamment des techniques supervisées de type SVM (acronyme pour « Support Vector Machine » se traduisant en français par machines à vecteurs de support ou séparateurs à vaste marge).

D'autres variantes non illustrées du système 1 sont également envisageables pourvu que les caractéristiques soient compatibles. Typiquement, selon un mode de réalisation non illustré, le système 1 est selon le troisième exemple et comporte un capteur 13.

Pour illustrer les capacités du système 1, il est détaillé dans ce qui suit trois expériences particulières menées avec le système 1 précédent.

Dans ces expériences, les souches bactériennes sont des souches commerciales ATCC (American Type Culture Collection). A partir d'une culture en milieu liquide après 24h d'incubation à 37°C, il est prélevée une suspension de 5 millilitres (ml) comprenant de l'eau et une quantité de cellules de la souche telle que la turbidité de la solution soit égale à 0,5 McF (standard de McFarland). La suspension est diluée d'un facteur 1/1000 à 1/100 selon les souches. Ensuite, un volume de 10 µl de cette suspension est ensuite inoculée sur le milieu de culture COS contenu dans une enceinte de type boîte de Pétri. La boîte ainsi inoculée est mise en incubation à 37°C. La boîte est sortie de l'incubateur 6h après l'inoculation.

Suivant le procédé décrit précédemment, il est acquis des images d'interférences en réflexion sur les colonies. De préférence, chaque image ne comporte qu'une seule figure d'interférence, laquelle correspond à un mircoorganisme à caractériser.

Chaque image est alors projetée sur une base de moments de Zernike issue d'une famille de polynômes de Zernike orthogonaux définis en coordonnées polaires sur le disque unité. Une telle base offre l'avantage d'une invariance par rotation ainsi qu'une limitation de redondance de l'information. Une telle projection est connue en soi. Cette étape permet de disposer d'indicateurs scalaires relatifs à la figure d'interférence comprise dans l'image. D'autres méthodes d'analyse quantitative peuvent être utilisées, qui consistent à projeter une image dans une base, afin d'obtenir des coordonnées de l'image analysée dans cette base.

Un vecteur, rassemblant lesdits indicateurs, appelé descripteur, est obtenu pour chaque image Un tel vecteur est constitué de 120 composantes correspondant aux modules des composantes de la projection sur les 120 premiers polynômes de la base.

Une fois cette base de données constituée, il est utilisé un algorithme de classification de type machine à vecteurs de support (SVM) et plus particulièrement l'algorithme d'optimisation séquentielle minimale (SMO). En effet, l'entraînement d'une machine à vecteurs de support requiert de résoudre un problème d'optimisation quadratique de grande taille et l'algorithme SMO propose de réduire le temps de calcul en le découpant en problèmes d'optimisation quadratique de tailles les plus petites possible qui seront résolus analytiquement. Cette classification est ensuite évaluée par une étape de validation croisée (aussi appelée sous le nom anglais « 10-fold cross-validation »). Les résultats sont alors combinés sous la forme d'une matrice de confusion.

Pour une première expérience, 400 échantillons équirépartis en 4 souches de la même espèce Escherichia Coli sont étudiées. La matrice de confusion obtenue est la suivante :

**Tableau 1 : Matrice de confusion pour la première expérience**

| **Souche d'Escherichia Coli** | **Classé comme EC10** | **Classé comme EC21** | **Classé comme EC28** | **Classé comme EC11** |
|---|---|---|---|---|
| EC10 - ATCC 25922 | 96 | 1 | 1 | 2 |
| EC21 - ATCC 35421 | 7 | 80 | 4 | 9 |
| EC28 - ATCC11775 | 6 | 6 | 80 | 8 |
| EC 11 - ATCC 8739 | 5 | 4 | 2 | 89 |

La matrice de confusion du tableau 1 se lit comme suit : en prenant la ligne en face de la souche EC10, sur 100 descripteurs d'EC10, 96 ont été reconnus comme étant de l'EC10, 1 comme étant de l'EC21, 1 comme étant de l'EC28 et 2 comme étant de l'EC11 et ainsi de suite. En appliquant cela à chaque espèce, sur 400 descripteurs, 345 ont bien été reconnus et 55 ont été confondus avec les descripteurs d'une autre souche. Ceci correspond à un taux global de classification de plus de 86%.

Le tableau 1 correspond ainsi à une classification sur 4 souches de la même espèce : Escherichia coli. Cela correspond à un niveau d'identification beaucoup plus fin qu'une identification inter-espèces. Il est obtenu un taux global de classification très satisfaisant de plus de 80% (86,25% exactement). Ce taux est du même ordre de grandeur que les résultats qui sont obtenus avec des figures de diffraction en transmission.

Pour une deuxième expérience, 500 échantillons équirépartis en 5 espèces de bactéries sont étudiées. La matrice de confusion obtenue est la suivante :

**Tableau 2 : Matrice de confusion pour la deuxième expérience**

| **Souche (espèce)** | **Classé comme EC21** | **Classé comme EC8** | **Classé comme AB30** | **Classé comme CF7** | **Classé comme SE9** |
|---|---|---|---|---|---|
| EC21 - ATCC 35421 (*Escherichia coli*) | 89 | 8 | 0 | 1 | 2 |
| EC10 - ATCC 25922 *(Enterobacter cloacae)* | 2 | 70 | 6 | 0 | 22 |
| AB30 - ATCC 23220 (*Acinetobacter baumanii*) | 2 | 4 | 94 | 0 | 0 |
| CF7 - ATCC 8090 *(Citrobacter freundii)* | 1 | 0 | 0 | 98 | 1 |
| SE9 - ATCC 14990 *(Staphylococcus epidermidis)* | 0 | 14 | 0 | 0 | 86 |

Dans la deuxième expérience, le taux global de classification s'élève à plus de 87%. Ce taux est du même ordre de grandeur que les résultats qui sont obtenus avec des figures de diffraction en transmission.

Pour une troisième expérience, 300 échantillons équirépartis en 3 souches du même genre de champignon Candida sont étudiées. La matrice de confusion obtenue est la suivante :

**Tableau 3 : Matrice de confusion pour la troisième expérience**

| **Souche (espèce)** | **Classé comme EC10** | **Classé comme EC21** | **Classé comme EC28** |
|---|---|---|---|
| CA36 - ATCC 14053 | 88 | 0 | 10 |
| (*Candida albicans)* | | | |
| CG38 -ATCC 2001 *(Candida glabrata*) | 0 | 100 | 0 |
| CT37 - ATCC 13803 *(Candida tropicalis).* | 6 | 0 | 94 |

Dans la troisième expérience, le taux global de classification s'élève à 94%. Le procédé mis en œuvre permet l'obtention de figures de diffraction exploitables par des algorithmes d'analyses et de classification, afin d'établir une aide à l'identification de microorganismes.

## Revendications

1. Système (1) d'observation d'objets comportant :
- une source lumineuse (3) propre à émettre de la lumière spatialement cohérente polarisée rectilignement selon une première direction (D1),
- un support (12) adapté pour recevoir un substrat ayant une surface comportant des objets, au moins l'un du support (12) et du substrat étant translucide ou opaque,
- un détecteur (7) propre à récolter de la lumière rétrodiffusée issue de l'interaction entre la lumière émise par la source lumineuse (3) et les objets,
- un séparateur (9) de polarisation propre à réfléchir de la lumière polarisée rectilignement selon une deuxième direction de polarisation (D2) et propre à transmettre de la lumière polarisée rectilignement selon une troisième direction (D3), la deuxième direction de polarisation (D2) étant perpendiculaire à la troisième direction (D3),
- une lame quart-d'onde (10), et
- une lentille (8) présentant un foyer image,
le séparateur (9) et la lame quart-d'onde (10) étant agencés pour que le séparateur (9) dirige la lumière émise par la source lumineuse (3) qui est incidente sur le séparateur (9) vers le substrat en passant par la lame quart-d'onde et dirige la lumière rétrodiffusée issue de l'interaction entre la lumière émise par la source lumineuse (3) et les objets et étant repassé par la lame quart-d'onde vers le détecteur (7) en passant par la lentille (8), le système d'observation (1) étant dépourvu d'optiques intercalées entre le séparateur (9) et la lame quart-d'onde (10), le système d'observation (1) étant dépourvu d'optiques intercalées entre la lame quart-d'onde (10) et le substrat, le détecteur étant positionné sur le foyer image de la lentille (8).

2. Système d'observation d'objets selon la revendication 1, dans lequel les objets sont des microorganismes, le substrat étant un substrat solide, notamment un substrat gélosé, adapté à la croissance desdits microorganismes.

3. Système d'observation d'objets selon la revendication 1 ou 2, dans lequel :
- soit la première direction (D1) et la deuxième direction (D2) sont identiques ;
- soit la première direction (D1) est différente de la deuxième direction (D2) auquel cas le système (1) comprend un élément d'ajustement de la direction de polarisation, l'élément d'ajustement de la direction de polarisation étant disposé entre la source lumineuse (3) et le séparateur (9), de façon que la lumière incidente au séparateur (9) soit polarisée selon la deuxième direction (D2).

4. Système d'observation d'objets selon l'une quelconque des revendications 1 à 3, dans lequel le substrat présente une surface destinée à interagir avec la lumière de source lumineuse (3), la surface étant lisse.

5. Système d'observation d'objets selon l'une quelconque des revendications 1 à 4, dans lequel le système comporte, en outre, un capteur (15) propre à acquérir une image des objets.

6. Système d'observation d'objets selon l'une quelconque des revendications 1 à 5, dans lequel la lumière issue de la source lumineuse (3) forme un faisceau, le système (1) comportant également un système optique (5, 6) propre à modifier la taille du faisceau, le système optique (5,6) étant également propre à obtenir une taille de faisceau comprise entre 30 microns et 250 microns.

7. Système d'observation d'objets selon l'une quelconque des revendications 1 à 6, dans lequel les objets sont des objets dont la taille est inférieure à un millimètre.

8. Système d'observation d'objets selon l'une quelconque des revendications 1 à 7, dans lequel les objets sont des microorganismes.

9. Système d'observation d'objets selon l'une quelconque des revendications 1 à 8, dans lequel le système d'observation (1) comprend, en outre, une lame demi-onde propre à modifier la polarisation de lumière émise par la source lumineuse (3).

10. Système d'observation d'objets selon l'une quelconque des revendications 1 à 9, dans lequel le système d'observation (1) comprend, en outre, un calculateur propre à analyser la lumière rétrodiffusée détecter par le détecteur (7) pour déduire au moins une caractéristique des objets.

11. Système d'observation d'objets selon l'une quelconque des revendications 1 à 10, dans lequel les objets font partie d'une boîte de Pétri présentant un corps cylindrique dont la surface de base est plane et un couvercle (18) cylindrique dont la surface de base est plane et forme un angle avec la surface de base du corps compris entre 0,1 degré et 15 degrés.

12. Procédé d'observation d'objets à l'aide d'un système (1) d'observation d'objets selon l'une quelconque des revendications 1 à 11.

13. Procédé selon la revendication 12, dans lequel la lumière issue de la source lumineuse (3) forme un faisceau, le système (1) comportant également un système optique (5, 6) propre à modifier la taille du faisceau et le procédé comporte l'adaptation de la taille du faisceau à la taille des objets.

14. Procédé selon la revendication 12 ou 13, dans lequel le procédé comporte la localisation d'un objet dans une image grand champ.

## Patentansprüche

1. System (1) zur Beobachtung von Objekten, aufweisend:
- eine Lichtquelle (3), welche dazu geeignet ist, linear entlang einer erste Richtung (D1) polarisiertes, räumlich kohärentes Licht auszustrahlen,
- einen Träger (12), welcher dazu eingerichtet ist, ein Substrat aufzunehmen, welches eine Objekte aufweisende Fläche hat, wobei mindestens einer/eines von dem Träger (12) und dem Substrat lichtdurchlässig oder opak ist,
- einen Detektor (7), welcher dazu geeignet ist, das Licht, welches von einer Interaktion zwischen dem durch die Lichtquelle (3) ausgestrahlten Licht und den Objekten zurückgestreut wird, zu sammeln,
- einen Polarisationsseparator (9), welcher dazu geeignet ist, das linear entlang einer zweiten Richtung (D2) polarisierte Licht zu reflektieren, und dazu geeignet ist, das linear entlang einer dritten Richtung (D3) polarisierte Licht weiterzuleiten, wobei die zweite Richtung (D2) senkrecht zur dritten Richtung (D3) ist,
- eine Viertelwellenplatte (10), und
- eine Linse (8), welche einen Bildbrennpunkt aufweist,
wobei der Separator (9) und die Viertelwellenplatte (10) so angeordnet sind, dass der Separator (9) das durch die Lichtquelle (3) ausgestrahlte Licht, welches auf den Separator (9) einfällt, unter Passieren durch die Viertelwellenplatte hin zum Substrat lenkt und das Licht, welches von einer Interaktion zwischen dem durch die Lichtquelle (3) ausgestrahlten Licht und den Objekten zurückgestreut wird und welches wieder durch die Viertelwellenplatte verlaufen ist, unter Passieren durch die Linse (8) hin zum Detektor (7) lenkt, wobei das System (1) zur Beobachtung frei von zwischen dem Separator (9) und der Viertelwellenplatte (10) angeordneten Optiken ist, wobei das System (1) zur Beobachtung frei von zwischen der Viertelwellenplatte (10) und dem Substrat angeordneten Optiken ist, wobei der Detektor auf dem Bildbrennpunkt der Linse (8) angeordnet ist.

2. System zur Beobachtung von Objekten gemäß dem Anspruch 1, wobei die Objekte Mikroorganismen sind, wobei das Substrat ein festes Substrat ist, insbesondere ein Agar-Substrat, welches für das der Mikroorganismen eingerichtet ist.

3. System zur Beobachtung von Objekten gemäß dem Anspruch 1 oder 2, wobei:
- entweder die erste Richtung (D1) und die zweite Richtung (D2) identisch sind,
- oder die erste Richtung (D1) verschieden von der zweiten Richtung (D2) ist, in welchem Fall das System (1) ein Element zur Anpassung der Polarisationsrichtung aufweist, wobei das Element zur Anpassung der Polarisationsrichtung zwischen der Lichtquelle (3) und dem Separator (9) derart angeordnet ist, dass das auf den Separator (9) einfallende Licht entlang der zweiten Richtung (D2) polarisiert wird.

4. System zur Beobachtung von Objekten gemäß irgendeinem der Ansprüche 1 bis 3, wobei das Substrat eine Fläche aufweist, welche dazu bestimmt ist, mit dem Licht der Lichtquelle (3) zu interagieren, wobei die Fläche glatt ist.

5. System zur Beobachtung von Objekten gemäß irgendeinem der Ansprüche 1 bis 4, wobei das System ferner einen Sensor (15), welcher dazu geeignet ist, ein Bild des Objekts zu erlangen, aufweist.

6. System zur Beobachtung von Objekten gemäß irgendeinem der Ansprüche 1 bis 5, wobei das von der Lichtquelle (3) stammende Licht einen Strahl bildet, wobei das System (1) außerdem ein optisches System (5, 6) aufweist, welches dazu geeignet ist, die Strahlgröße zu verändern, wobei das optische System (5, 6) außerdem dazu geeignet ist, eine Strahlgröße, welche zwischen 30 Mikron und 250 Mikron liegt, zu erlangen.

7. System zur Beobachtung von Objekten gemäß irgendeinem der Ansprüche 1 bis 6, wobei die Objekte Objekte sind, deren Größe kleiner als ein Millimeter ist.

8. System zur Beobachtung von Objekten gemäß irgendeinem der Ansprüche 1 bis 7, wobei die Objekte Mikroorganismen sind.

9. System zur Beobachtung von Objekten gemäß irgendeinem der Ansprüche 1 bis 8, wobei das System zur Beobachtung (1) ferner eine Halbwellenplatte aufweist, welche dazu geeignet ist, die Polarisation des durch die Lichtquelle (3) ausgestrahlten Lichts zu verändern.

10. System zur Beobachtung von Objekten gemäß irgendeinem der Ansprüche 1 bis 9, wobei das System zur Beobachtung (1) ferner einen Rechner aufweist, welcher dazu geeignet ist, das zurückgestreute Licht, welches durch den Detektor (7) erfasst wird, zu analysieren, um mindestens eine Eigenschaft der Objekte abzuleiten.

11. System zur Beobachtung von Objekten gemäß irgendeinem der Ansprüche 1 bis 10, wobei die Objekte Teil einer Petrischale sind, welche einen zylindrischen Körper, dessen Grundfläche eben ist, und einen zylindrischen Deckel (18), dessen Grundfläche eben ist und einen Winkel mit der Grundfläche des Körpers, welcher zwischen 0,1 Grad und 15 Grad liegt, bildet, aufweist.

12. Verfahren zur Beobachtung von Objekten mittels eines Systems (1) zur Beobachtung von Objekten gemäß irgendeinem der Ansprüche 1 bis 11.

13. Verfahren gemäß dem Anspruch 12, wobei das von der Lichtquelle (3) stammende Licht einen Strahl bildet, wobei das System (1) außerdem ein optisches System (5, 6) aufweist, welches dazu geeignet ist, die Strahlgröße zu verändern, und wobei das Verfahren das Anpassen der Strahlgröße an die Größe der Objekte aufweist.

14. Verfahren gemäß dem Anspruch 12 oder 13, wobei das Verfahren das Lokalisieren eines Objekts in einer Großfeldaufnahme aufweist.

## Claims

1. A system (1) for observing objects, including:
- a light source (3) able to emit spatially coherent polarized light rectilinearly along a first direction (D1),
- a holder (12) able to receive a substrate having a surface including objects, at least one of the holder (12) and the substrate being translucent or opaque,
- a detector (7) able to collect the backscattered light from the interaction between the light emitted by light source (3) and the objects,
- a polarization splitter (9) able to reflect polarized light rectilinearly along a second polarization direction (D2) and able to transmit polarized light rectilinearly along a third direction (D3), the second polarization direction (2) being perpendicular to the third direction (D3), and
- a quarter-wave plate (10), and
- a lens (8) having an image focal point,
the splitter (9) and the quarter-wave plate (10) being arranged so that the splitter (9) directs the light emitted by the light source (3) which is incident on the separator (9) toward the substrate and passes through the quarter-wave plate and directs the backscattered light from the interaction between the light emitted by the light source (3) and the objects and having passed again through the quarter-wave plate towards the detector (7) passing by the lens (8), the observation system (1) having no optics inserted between the splitter (9) and the quarter-wave plate (10), the observation system (1) having no optics between the quarter-wave plate (10) and the substrate. between the quarter-wave plate (10) and the substrate., the detector (7) being positioned on the image focal point of the lens (8).

2. The system for observing objects according to claim 1, wherein the objects are microorganisms, the substrate being a solid substrate, in particular an agar substrate, suitable for the growth of said microorganisms.

3. The system for observing objects according to claim 1 or 2, wherein:
- either the first direction (D1) and the second direction (D2) are identical;
- or the first direction (D1) is different from the second direction (D2), in which case the system (1) comprises an element for adjusting the polarization direction, the element for adjusting the polarization direction being that positioned between the light source (3) and the splitter (9), such that the incident light at the splitter (9) is polarized along the second direction (D2).

4. The system for observing objects according to any one of claims 1 to 3, wherein the substrate has a surface intended to interact with the light source (3) light, the surface being smooth.

5. The system for observing objects according to any one of claims 1 to 4, wherein the system further includes a sensor (15) able to acquire an image of the objects.

6. The system for observing objects according to any one of claims 1 to 5, wherein the light issued from the light source (3) forms a beam, the system (3) also comprising an optic system (5, 6) able to modify the size of the beam, the optic system (5, 6) being also able to obtain a beam size comprised between 30 microns and 250 microns.

7. The system for observing objects according to any one of claims 1 to 6, wherein the objects are objects measuring less than a millimeter.

8. The system for observing objects according to any one of claims 1 to 7, wherein the objects are microorganisms.

9. The system for observing objects according to any one of claims 1 to 8, wherein the observation system (1) further comprises a half-wave plate able to modify the polarization of light emitted by the light source (3).

10. The system for observing objects according to any one of claims 1 to 9, wherein the observation system (1) further comprises a computer able to analyze the backscattered light detected by the detector (7) to deduce at least one characteristic of the objects.

11. The system for observing objects according to any one of claims 1 to 10, wherein the objects are part of a Petri dish having a cylindrical body, the base surface of which is planar, and a cylindrical cover (18), the base surface of which is planar and forms an angle with the base surface of the body comprised between 0.1 degrees and 15 degrees.

12. A method for observing objects using a system (1) for observing objects according to any one of claims 1 to 11.

13. The method according to claim 12, wherein the method includes adapting the size of the beam to the size of the objects.

14. The method according to claim 12 or 13, wherein the method includes locating an object in a large-field image.
